# EUROPEAN PATENT SPECIFICATION

(11) **EP 3 459 763 B1**
(45) Date of publication and mention of the grant of the patent: **14.10.2020**
(21) Application number: 17799488.6
(22) Date of filing: 18.05.2017
(51) Int. Cl.: B60C 5/01, B60C 9/22

(54) **TIRE**
REIFEN
PNEUMATIQUE

(30) Priority: 20.05.2016 JP 2016101861
(43) Date of publication of application: 27.03.2019
(73) Proprietor: Bridgestone Corporation, Tokyo 104-8340 (JP)
(72) Inventor: KOUNO, Yoshihide, Tokyo 104-8340 (JP); MATSUI, Kenji, Tokyo 104-8340 (JP); MATSUMOTO, Yoshifumi, Tokyo 104-8340 (JP); KON, Seiji, Tokyo 104-8340 (JP)
(74) Representative: Oxley, Robin John George
(86) International application number: PCT/JP2017/018751
(87) International publication number: WO 2017/200064

(56) References cited:
- WO-A1-2014/129380
- JP-A- 2003 104 005
- JP-A- 2012 035 500
- JP-A- 2014 205 462
- JP-A- 2014 210 487

## Description

### Technical Field

The present disclosure relates to a tire having a tire frame member made of a resin material.

### Background Art

Using thermoplastic resins, thermoplastic elastomers, and the like as tire materials has been proposed, for the purposes of reducing weight and facilitating recycling, and, for example, Japanese Patent Application Laid-Open No. 2011-042235 discloses an air tire having a tire frame member that is molded using a thermoplastic high polymer material.

This tire is provided with a belt layer having high stiffness that includes a cord extending on an outer periphery of the tire frame member in a tire circumferential direction. Reference is also made to JP 2012-035500, JP 2003-104005, JP 2014-205462, WO 2014/129380 and JP 2014-210487.

### SUMMARY OF INVENTION

### Problems to be Solved by the Invention

In tires, the width of a belt layer has effects on tire performance. As the tire performance, there are, for example, durability with a high internal pressure and under a heavy load, durability at a high speed, anti-wear performance, and the like.

If a belt layer that has high stiffness uniformly in a tire width direction is provided, a tire can stand a high internal pressure and a heavy load, owing to its hoop effect.

However, if the stiff belt layer has a narrow width, outside portions of the belt layer in a tire width direction (portions that are not pressed by the belt layer) protrude outwardly in a tire radial direction, during driving at a high speed, in an outer peripheral portion of the tire, thus causing an increase in heat generation, owing to deformation.

In a tread, at a portion having the belt layer in its radial inside, the belt layer can bind movement of the tread situated thereon in a tire circumferential direction.

However, the belt layer cannot bind the movement of the tread at portions having no belt layer in their radial inside, in other words, in the vicinity of shoulders at tire width outer portions, relative to end portions of the belt layer, so the tread easily moves in the tire circumferential direction and is trailed on a road surface at a larger area during driving, as compared with the portion having the belt layer in its radial inside, thus accelerating the progress of wear.

On the other hand, if the belt layer has a wide width, since the belt layer widely presses a radial outer portion of a tire frame member, the protrusion can be prevented widely. However, in the tread, at portions each between an end portion of the belt layer and a tire width outer portion, i.e. in the vicinity of the shoulders, since a local deformation occurs during driving under a heavy load, a stress tends to concentrate there, thus possibly causing a break, e.g. the occurrence of a crack or the like owing to concentration of the stress. If the belt layer has a narrow width, since the deformed portions, i.e. the portions each between the end portion of the belt layer and the tire width outer portion, have wide widths, the deformation is not local, and the stress hardly concentrates.

As described above, it is difficult to ensure all of high durability with a high internal pressure and under a heavy load, high durability at a high speed, and anti-wear performance, only by providing the belt layer that has high stiffness uniformly in the tire width direction on an outer periphery of the tire frame member.

Considering the circumstances described above, the present disclosure aims at ensuring all of high durability with a high internal pressure and under a heavy load, high durability at a high speed, and anti-wear performance, in a tire having a tire frame member made of a resin material.

### Means for Solving the Problems

A tire according to a first aspect includes a tire frame member made of a resin material, the tire frame member having a side portion extending outwardly from a bead portion in a tire radial direction and a crown portion extending inwardly from the side portion in a tire width direction; a tread disposed outside the tire frame member in the tire radial direction; and a belt layer disposed between the tire frame member and the tread, the belt layer constituting a center area at a middle in the tire width direction and shoulder areas at both sides of the center area in the tire width direction, a width dimension BCW of the center area in a tire axial direction being in a range of from 85 to 105% of a ground width dimension TW of the tread. In a case in which Hc represents stiffness of the center area, and Hs represents stiffness of the shoulder area, Hc>Hs, wherein stiffness represents tensile stiffness in the tire radial direction per unit of width.

### Effect of the Invention

As described above, according to the tire of the present disclosure, the tire that has the belt layer on an outer periphery of the tire frame member has the beneficial effect of ensuring high durability with a high internal pressure and under a heavy load, high durability at a high speed, and anti-wear performance.

### BRIEF DESCRIPTION OF THE DRAWINGS

Fig. 1 is a sectional view of an air tire according to a first embodiment of the present invention, sectioned along a rotation axis;
Fig. 2 is a sectional view of the tire showing the vicinity of a belt reinforcement layer;
Fig. 3 is a sectional view of an air tire according to a second embodiment of the present invention, sectioned along a rotation axis; and
Fig. 4 is a sectional view of an air tire according to a third embodiment of the present invention, sectioned along a rotation axis.

### DETAILED DESCRIPTION

### [First Embodiment]

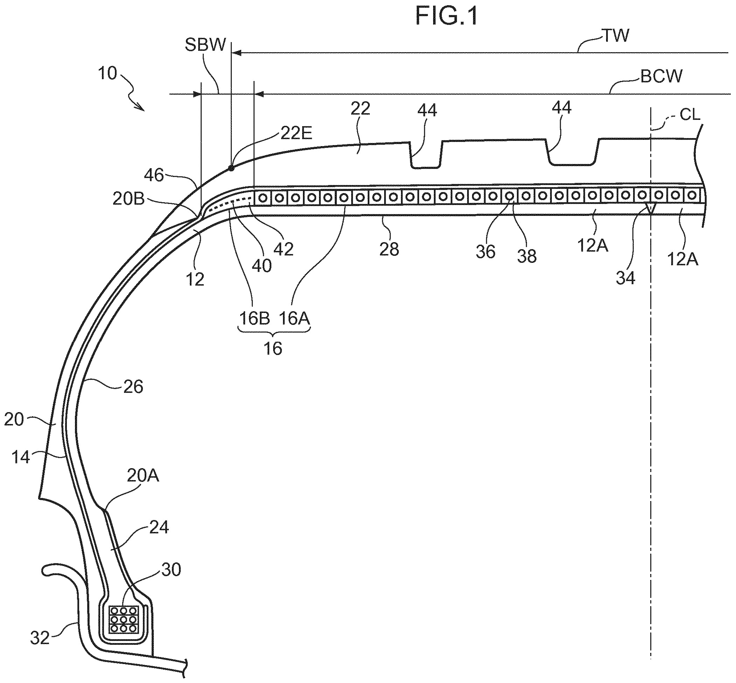

A tire 10 according to a first embodiment of the present invention will be described with reference to Fig. 1. Note that, the tire 10 according to the present embodiment is used in passenger cars.

As shown in Fig. 1, the tire 10 according to the present embodiment includes a tire frame member 12, a frame member reinforcement layer 14, a belt layer 16, side treads 20, and a top tread 22.

### (Tire Frame Member)

The tire frame member 12 is molded of a resin material into a ring shape by joining a pair of tire pieces 12A in a tire equatorial plane CL. Note that, the tire frame member 12 may be formed by joining three or more tire pieces 12A.

The tire frame member 12 includes a pair of bead portions 24, a pair of side portions 26 that extend outwardly from the pair of bead portions 24, respectively, in a tire radial direction, and a crown portion 28 that extends inwardly from the side portions 26 in a tire width direction.

As the resin material for making the tire frame member 12, a thermoplastic resin, a thermoplastic elastomer (TPE), a thermosetting resin, or the like having the same elasticity as rubber can be used. Considering elasticity during driving and moldability during manufacturing, the thermoplastic elastomer is preferably used. Note that, the tire frame member 12 may be entirely or partly made of the resin material.

As the thermoplastic elastomer, there are a polyolefin thermoplastic elastomer (TPO), a polystyrene thermoplastic elastomer (TPS), a polyamide thermoplastic elastomer (TPA), a polyurethane thermoplastic elastomer (TPU), a polyester thermoplastic elastomer (TPC), a dynamic cross-linking thermoplastic elastomer (TPV), and the like.

As the thermoplastic resin, there are a polyurethane resin, a polyolefin resin, a vinyl chloride resin, a polyamide resin, and the like. As a thermoplastic material, a material having, for example, a deflection temperature under a load (under a load of 45 MPa), defined by ISO75-2 or ASTM D648, of 78°C or more, a tensile yield strength, defined by JIS K7113, of 10 MPa or more, a tensile fracture elongation (JIS K7113), defined by the same JIS K7113, of 50% or more, and a Vicat softening temperature (A test), defined by JIS K7206, of 130 °C or more can be used.

Bead cores 30 are embedded in the bead portions 24 of the tire frame member 12. As a material for making the bead core 30, a metal, an organic fiber, an organic fiber covered with a resin, a rigid resin, or the like can be used. In the tire frame member 12, the bead portion 24 is made thick so as to have higher flexural stiffness than the side portion 26. The bead cores 30 may be omitted, if sufficient stiffness is ensured in the bead portions 24 to the extent of having no problem in a fit with a rim 32.

Between the pair of tire pieces 12A of the tire frame member 12, resin joint members 34 are provided at the center of the crown portion 28 in the tire width direction, in other words, in the tire equatorial plane CL. The pair of tire pieces 12A are joined to each other through the joint members 34 by welding.

As a resin used for the joint member 34, the same or a different type of thermoplastic material as or from the material of the tire piece 12A can be used. The tire pieces 12A may be joined to each other by welding, through an adhesive, or the like, without using the joint members 34.

### (Belt Layer)

The belt layer 16 is provided on an outer peripheral surface of the crown portion 28.

The belt layer 16 includes a center area 16A at its center in the tire width direction, and shoulder areas 16B at both sides of the center area 16A in the tire width direction.

### (Center Area)

In a case in which BCW represents the width dimension of the center area 16A measured along a tire axial direction, and TW represents the ground width dimension of the top tread 22 measured along the tire axial direction, the width dimension BCW of the center area 16A is set within a range of from 85 to 105% of the ground width dimension TW of the top tread 22.

The center area 16A of the belt layer 16 is configured to include a cord 36 that extends along a tire circumferential direction. To be more specific, the center area 16A according to the present embodiment is configured by helically winding the steel cord 36 covered with a resin 38 in the tire circumferential direction. The cord 36 is made of a multi-filament (stranded wires), but may be made of a mono-filament (a solid wire).

As the resin 38 for covering the cord 36, the same or a different type of thermoplastic material as or from the material of the tire piece 12A can be used. Note that, the resin 38 of the center area 16A is welded to the tire frame member 12.

Note that, "extending along the tire circumferential direction" described here includes extension at an angle of 5° or less with respect to the tire circumferential direction.

The ground width dimension TW of the top tread 22 is the dimension between one ground end 22E and the other ground end 22E measured along the tire width direction, provided that the tire 10 is fitted on a standard rim defined by JATMA YEAR BOOK (Japan Automobile Tyre Manufactures Association, 2016), and the tire 10 is filled with air at an internal pressure of 100% of an air pressure (maximum air pressure) corresponding to a maximum load capability (a boldface load in an internal pressure-load capability correspondence table) in applicable size and ply rating in JATMA YEAR BOOK, and is applied with the maximum load capability.

### (Shoulder Areas)

The shoulder areas 16B of the belt layer 16 are designed to have lower stiffness than the center area 16A, in comparison per unit of width in the tire width direction. Note that, "stiffness" described here represents tensile stiffness in the tire circumferential direction.

To make the tensile stiffness of the shoulder area 16B in the tire circumferential direction lower than the tensile stiffness of the center area 16A in the tire circumferential direction, the shoulder area 16B according to the present embodiment is configured such that a plurality of steel cords 40 each of which is thinner than the cord 36 of the center area 16A are inclined with respect to the tire circumferential direction and covered with a rubber 42 having lower tensile stiffness than the cord 40.

The inclination angle of the cords 40, with respect to the tire circumferential direction, is preferably within a range of from 0 to 10°.

Upon applying a tensile force in the tire circumferential direction, the cord 36 is burdened with the tensile force in the center area 16A. However, in the shoulder areas 16B, the rubber 42 between the cords 40 is elastically deformed and stretched, by the application of the tensile force, so the shoulder areas 16B have the lower tensile stiffness than the center area 16A in the circumferential direction. Note that, the cord 40 is made of a multi-filament (stranded wires), but may be made of a mono-filament (a solid wire).

Note that, as other methods to make the shoulder areas 16B have lower stiffness than the center area 16A, there are, for example, the following methods (1) to (4).
(1) The cord 36 of the center area 16A is a non-tensile cord, while the cords 40 of the shoulder areas 16B are tensile cords, so the shoulder areas 16B have lower stiffness than the center area 16A. The tensile cord (also called high elongation cord) refers to a cord that has a large total amount of tension to a break, and has the degree of tension of, for example, 4% or more at the time of the break. "The degree of tension at the time of the break" refers to a value calculated from a measurement result of a tensile test adhering to JIS Z 2241. The non-tensile cord refers to a cord having an amount of tension of less than 4% at the time of the break.
(2) The center area 16A has a non-tensile property, while the shoulder areas 16B have a tensile property, so the shoulder areas 16B have lower stiffness than the center area 16A. As an example, the cord 36 of the center area 16A is in the shape of a straight line in plan view, while the cords 40 of the shoulder areas 16B are in a wavy shape or a zigzag shape in plan view.
(3) The cord 36 of the center area 16A is a metal cord, while the cords 40 of the shoulder areas 16B are organic fiber cords, so the shoulder areas 16B have lower stiffness than the center area 16A. As the metal cord, for example, there is a steel cord. As the organic fiber cord, for example, there are a polyester cord, a nylon cord, a PET cord, an aromatic polyamide cord, and the like.
(4) The implantation density (number/inch) of the cords 40 per unit width of the shoulder areas 16B is set lower than the implantation density (number/inch) of the cord 36 per unit width of the center area 16A, so the shoulder areas 16B have lower stiffness than the center area 16A. In a case in which the cords 40 and the cord 36 have the same specifications, the implantation density of the cords 40 is preferably set within a range of from 90 to 50% of the implantation density of the cord 36. Note that, the implantation density represents that how many cords are disposed per unit width (e.g. per inch), and can be also referred to as an implantation number.

Note that, by an appropriate combination of the above methods, the stiffness of the shoulder areas 16B may be made lower than that of the center area 16A.

### (Frame Member Reinforcement Layer)

The frame member reinforcement layer 14 is disposed on a tire outer surface of the tire frame member 12. The frame member reinforcement layer 14 extends along the outer surface of the tire frame member 12 from the inside of the bead core 30 in the tire radial direction to the outside in the tire radial direction, and further extends beyond the tire equatorial plane CL to the inside of the opposite bead core 30 in the tire radial direction.

The frame member reinforcement layer 14 includes a plurality of reinforcement cords (not illustrated) covered with a rubber (not illustrated). The reinforcement cords of the frame member reinforcement layer 14 are made of organic fiber mono-filaments (solid wires) or organic fiber multi-filaments (stranded wires), which extend in the radial direction and are arranged in parallel in the tire circumferential direction. The reinforcement cords of the frame member reinforcement layer 14 may be inclined at an angle of 10° or less, with respect to the tire radial direction, in tire side view.

The frame member reinforcement layer 14 according to the present embodiment is formed by gluing a single ply 15, in which the plurality of reinforcement cords arranged in parallel with each other are covered with the (unvulcanized) rubber, on an outer peripheral surface of the molded tire frame member 12.

As the reinforcement cord of the frame member reinforcement layer 14, for example, a polyester cord, a nylon cord, a PET cord, an aromatic polyamide cord, or the like can be used. As a material for the reinforcement cord of the frame member reinforcement layer 14, metal such as steel may be used. Note that, the frame member reinforcement layer 14 may be made of reinforcement cords covered with a resin, instead of the rubber.

### (Side Treads)

The pair of side treads 20 are provided on the outer surface of the frame member reinforcement layer 14 so as to extend from the bead portions 24 of the tire frame member 12 to the outside of the crown portion 28 in the tire width direction. The side treads 20 may be made of the same type of rubber as that used in sidewalls of conventional rubber air tires.

An inner end portion 20A of the side tread 20 in the tire radial direction extends along an inner peripheral surface of the bead portion 24 of the tire frame member 12, and more specifically, to the inside of the bead core 30 in the tire radial direction. An outer end portion 20B of the side tread 20 in the tire radial direction is situated in the vicinity of the shoulder area 16B.

### (Top Tread)

On the outside of the frame member reinforcement layer 14 in the tire radial direction, the top tread 22 is disposed as a tread. The top tread 22 is made of a rubber having higher wear resistance than the resin material for forming the tire frame member 12, and may be made of the same type of rubber as a tread rubber used in conventional rubber air tires. Note that, drainage grooves 44 are formed in a tread surface of the top tread 22.

To manufacture the tire 10 according to the present embodiment, the center area 16A, the shoulder areas 16B, and the frame member reinforcement layer 14 are disposed on the outer surface of the tire frame member 12 molded in advance, and an unvulcanized rubber, which is to be the side treads 20 and the top tread 22, is further disposed on an outer surface thereof to obtain a green tire, and the green tire is loaded into a vulcanization mold to perform vulcanization molding. As the frame member reinforcement layer 14 disposed on the outer surface of the tire frame member 12, the reinforcement cords covered with the unvulcanized rubber are used. In the same manner, as the shoulder areas 16B disposed on the outer surface of the tire frame member 12, the cords 40 covered with the unvulcanized rubber 42 are used.

### (Operation and Effects)

In the tire 10 according to the present embodiment, the belt layer 16 is provided between the tire frame member 12 made of the resin material and the top tread 22 made of the rubber, in other words, on an outer peripheral portion of the crown portion 28 of the tire frame member 12. In the belt layer 16, the center area 16A the width dimension BCW of which in the tire axial direction is set at 85 to 105% of the ground width dimension TW of the top tread 22 is designed to have higher stiffness than the shoulder areas 16B situated on both sides of the center area 16A. Therefore, the stiff center area 16A can effectively press the middle of an outer peripheral portion of the tire frame member 12 inwardly in the tire radial direction. In other words, in the center area 16A, the high hoop effect can be obtained, and therefore it is possible to prevent the top tread 22 from protruding outwardly mainly at a road contact portion (for example, in the case of having a high internal pressure, a high rotation speed, or the like).

In the tire 10 according to the present embodiment, since the width dimension BCW of the stiff center area 16A is set in the range of from 85 to 105% of the ground width dimension TW, and the shoulder areas 16B having lower circumferential tensile stiffness than the center area 16A are provided outside the center area 16A in the tire width direction, it is possible to prevent an outward protrusion in outer portions of the top tread 22 in the tire width direction, relative to the center area 16A, in other words, in the vicinity of shoulders 46, as compared with the case of having no shoulder areas 16B.

Since the shoulder areas 16B having lower circumferential tensile stiffness than the center area 16A are provided outside the center area 16A in the tire width direction, it is possible to prevent a local deformation in the vicinity of the shoulders 46, under a heavy load. Therefore, it is possible to improve durability under the heavy load.

In the tire 10 according to the present embodiment, since the center area 16A the width dimension BCW of which is set in the range of from 85 to 105% of the ground width dimension TW can bind the top tread 22 that is in the outside of the center area 16A in the tire radial direction, the the top tread 22 is bound by the center area 16A mainly at the road contact portion thereof, thus decelerating the progress of wear, as compared with the case of having no center area 16A.

In the tire 10 according to the present embodiment, since the shoulder areas 16B disposed outside the center area 16A in the tire width direction bind the top tread 22 that is in the outside of the shoulder areas 16B in the tire radial direction, the circumferential movement of the top tread 22 is prevented even in the vicinity of the shoulders 46, corresponding to the outside portions of the center area 16A in the tire width direction, thus preventing the progress of wear.

According to the above operation, the tire 10 having the resin tire frame member 12 according to the present embodiment can ensure all of high durability with a high internal pressure, high durability under a heavy load, high durability at a high speed, and anti-wear performance.

If the width dimension SBW of the shoulder area 16B is less than 5% of the width dimension BCW of the center area 16A, there is little merit in providing the shoulder areas 16B. On the other hand, if the width dimension SBW of the shoulder area 16B exceeds 15% of the width dimension BCW of the center area 16A, there is a merit in providing the shoulder areas 16B, but an increase in usage of the cords 40, more than necessary, causes an increase in weight of the tire 10.

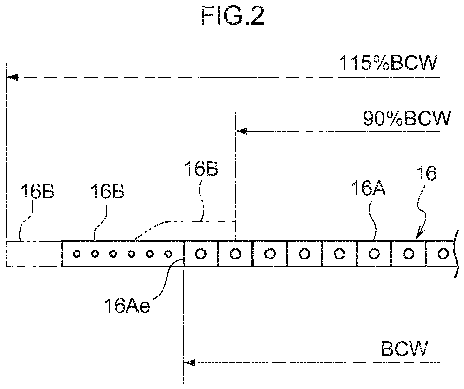

As shown in Fig. 2, a ply constituting the shoulder area 16B, in other words, the cords 40 covered with the rubber 42 may be partly overlapped with the cord 36 of the center area 16A, or a slight gap may be formed between the center area 16A and the shoulder area 16B, as long as the effects of providing the shoulder areas 16B are not inhibited.

The ply constituting the shoulder area 16B may be provided in any position, as long as the ply is disposed at least outside an end portion 14E of the center area 16A in the tire width direction, but as shown in Fig. 2, the ply is preferably disposed between an inward position of 90% of the width dimension BCW of the center area 16A in the tire width direction and an outward position of 115% of the width dimension BCW of the center area 16A in the tire width direction, with respect to the end portion 16Ae of the center area 16A.

### [Second Embodiment]

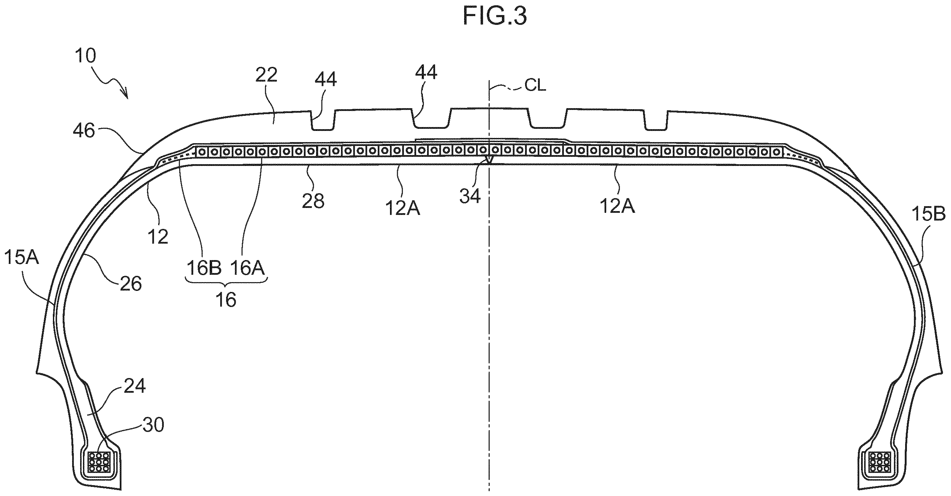

Next, a tire 10 according to a second embodiment of the present invention will be described with reference to Fig. 3. Note that, the same components as those of the first embodiment are indicated with the same reference numerals, and the description thereof is omitted.

Although the frame member reinforcement layer 14 of the tire 10 according to the first embodiment is formed of the single ply 15 that is bonded in a straddle manner from one of the bead portions 24 of the tire frame member 12 to the other bead portion 24, but the tire 10 according to the present embodiment, as shown in Fig. 3, is configured to include a ply 15A that extends from one bead portion 24 beyond a tire equatorial plane CL and ends in the vicinity of the tire equatorial plane CL, and a ply 15B that extends from the other bead portion 24 beyond the tire equatorial plane CL and ends in the vicinity of the tire equatorial plane CL, in addition that partly overlaps with the ply 15A in the tire equatorial plane CL.

Only the difference between the tire 10 according to the present embodiment and the tire 10 according to the first embodiment is the structure of the frame member reinforcement layer 14, and the other structure is the same. The tire 10 according to the present embodiment can have the same operation and effects as the tire 10 according to the first embodiment.

### [Third Embodiment]

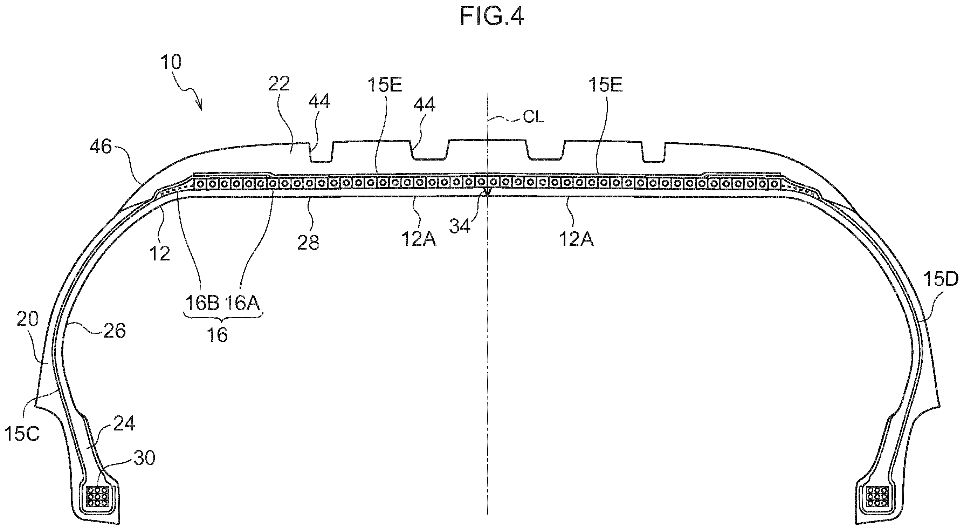

Next, a tire 10 according to a third embodiment of the present invention will be described with reference to Fig. 4. Note that, the same components as those of the first embodiment are indicated with the same reference numerals, and the description thereof is omitted.

As shown in Fig. 4, the tire 10 according to the present embodiment is configured to include a ply 15C that extends from one bead portion 24 beyond an end portion of a center area 16A and ends in the vicinity of the end portion of the center area 16A, a ply 15D that extends from the other bead portion 24 beyond an end portion of the center area 16A and ends in the vicinity of the end portion of the center area 16A, and a ply 15E that is disposed outside the center area 16A in the tire radial direction so as to cover an outer peripheral portion of the center area 16A and cover outer peripheral portions of the ply 15C and the ply 15D.

Only the difference between the tire 10 according to the present embodiment and the tire 10 according to the first embodiment is the structure of the frame member reinforcement layer 14, and the other structure is the same.

According to the tire 10 of the present embodiment, since a ply is divided into the ply 15C and the ply 15D that are mainly disposed along side surfaces of side portions 26, and the ply 15E that is mainly disposed along a crown portion 28, it is possible to dispose the plies having appropriate specifications in accordance with the individual portions.

The tire 10 according to the present embodiment can have the same operation and effects as the tire 10 according to the first embodiment.

### (Test Examples)

To verify the effects of the present invention, prototypes of tires that embody the present invention, as practical examples, and tires as comparative examples were built, and a BF drum test, a high-speed drum test, and a wear test were performed thereon.

. BF drum test: evaluates durability of beads (side cases).
Internal pressure: 300 kPa
Load: A load of 180 to 200% of a MAX load of a compliant standard
Test method: Whether the tire can be driven a stipulated distance or more (lower limit of 4500 km) at 60 km/h is checked.

. High-speed drum test: evaluates high-speed durability of the tire. Conditions are determined depending on a speed range (W range conditions are described below).
Internal pressure: 320 kPa
Load: A load of 68% of a MAX load of a compliant standard
Test method: A speed is increased from 230 km/h by 10 km/h at intervals of ten minutes, until a break occurs. Whether to clear a reference value is checked.

. Wear test: Anti-wear performance (wear life) and wear appearance (the presence or absence of unbalanced wear) are checked in an actual vehicle test.
Internal pressure: A condition specific to a vehicle
Load: A load set on the vehicle
Test method: After driving a certain distance in conditions imitating each market, a wear amount and wear appearance are measured.

Specifications of tires used in the tests are described below.
Tire size: 225/ 40R18
Rim size: 7.5 J to 8.0 J
Internal pressure: depending on test item
Structure of center area of belt layer: cord is spiral (helically wound)
Material for cord of center area of belt layer: steel cord
Structure (thickness) of cord of center area of belt layer: φ 1.4 mm
Implantation density of cord of center area of belt layer: 0.42 cords/ 1 mm
Structure of shoulder areas of belt layer: cords are inclined at 8° with respect to a tire circumferential direction
Material for cords of shoulder areas of belt layer: nylon cords
Structure (thickness) of cords of shoulder areas of belt layer: φ 0.5 mm
Implantation density of cords in shoulder areas of belt layer: 1 cord/ 1 mm

Note that, tires 1 to 5 are different in the width dimension BCW of each shoulder area, with respect to the ground width dimension TW of a top tread, though the tires 1 to 5 are the same in the other structure.

Test results are shown in the following Table 1.

**Table 1**

| | Tire 1 | Tire 2 | Tire 3 | Tire 4 | Tire 5 |
|---|---|---|---|---|---|
| Ground width dimension TW (mm) of top tread | 200 | 200 | 200 | 200 | 200 |
| Width dimension BCW (mm) of center area | 150 | 175 | 190 | 210 | 220 |
| Width dimension SBW (mm) of shoulder area | 12 | 12 | 12 | 12 | 12 |
| BCW/TW (%) | 75 | 85 | 95 | 105 | 110 |
| Evaluation of BF drum test | 10000 km | 5500 km | 4500 km | 3000 km | 2500 km NG |
| Evaluation of high-speed drum test | 280 km/h Lower limit | 290 km/h | 300 km/h | 310 km/h | 320 km/h |
| Evaluation of wear test | Presence of unbalanced wear | OK | OK | OK | OK |

It is apparent from the test results that the tires 2 to 4 whose BCW/TW is within a range of from 85 to 105% have good results in each test.

### [Other embodiments]

The embodiments of the present invention are described above, but the present invention is not limited to the above embodiments, and, as a matter of course, can be performed with various modifications, other than the above, without departing from the scope of the claims.

In the above embodiments, the frame member reinforcement layer 14 is disposed outside the belt layer 16, but the frame member reinforcement layer 14 may be disposed inside the belt layer 16.

The shoulder areas 16B according to the above embodiments have a configuration such that the cords 40 are covered with the rubber 42, but the cords 40 may be covered with a resin.

The tires 10 according to the embodiments are used in the passenger cars, but the present invention can be applied to tires for vehicles other than the passenger cars.

## Claims

1. A tire (10) comprising:
a tire frame member (12) made of a resin material, the tire frame member (12) having a side portion (26) extending outwardly from a bead portion (24) in a tire radial direction and a crown portion (28) extending inwardly from the side portion (26) in a tire width direction;
a tread disposed outside the tire frame member (12) in the tire radial direction; and
a belt layer (16) disposed between the tire frame member (12) and the tread, the belt layer (16) constituting a center area (16A) at a middle in the tire width direction and shoulder areas (16B) at both sides of the center area (16A) in the tire width direction, a width dimension (BCW) of the center area (16A) in a tire axial direction being in a range of from 85 to 105% of a ground width dimension (TW) of the tread, **characterized in that**:
in a case in which Hc represents stiffness of the center area (16A), and Hs represents stiffness of the shoulder areas (16B), Hc>Hs, wherein stiffness represents tensile stiffness in the tire circumferential direction per unit of width.

2. The tire (10) according to claim 1, wherein:
the belt layer (16) includes a plurality of cords (36, 40),
in the center area (16A), the cord (36) extends in a tire circumferential direction, and
in the shoulder areas (16B), the cord (40) is inclined with respect to the tire circumferential direction.

3. The tire (10) according to claim 1, wherein:
the belt layer (16) includes a plurality of cords (36, 40), and
in the center area (16A) and the shoulder areas (16B), the cords (36, 40) extend along a tire circumferential direction.

4. The tire (10) according to claim 2 or 3, wherein:
the cord (36) of the center area (16A) is a metal cord, and
the cord (40) of the shoulder areas (16B) is an organic fiber cord.

5. The tire (10) according to any one of claims 2 to 4, wherein an implantation density of the cord (36) in the center area (16A) is lower than an implantation density of the cord (40) in the shoulder areas (16B).

6. The tire (10) according to any one of claims 2 to 5, wherein the cord (40) of the shoulder areas (16B) has a smaller diameter than the cord (36) of the center area (16A).

7. The tire (10) according to any one of claims 2 to 6, wherein the cord (36) of the center area (16A) has a non-tensile property, and the cord (40) of the shoulder areas (16B) has a higher tensile property than the cord (36) of the center area (16A).

## Patentansprüche

1. Reifen (10), der Folgendes umfasst:
ein Reifenrahmenelement (12), das aus einem Harzwerkstoff hergestellt ist, wobei das Reifenrahmenelement (12) einen Seitenabschnitt (26), der sich von einem Wulstabschnitt (24) aus in einer Reifenradialrichtung nach außen erstreckt, und einen Scheitelabschnitt (28), der sich von dem Seitenabschnitt (26) aus in einer Reifenbreitenrichtung nach innen erstreckt, aufweist,
eine Lauffläche, die in der Reifenradialrichtung außerhalb des Reifenrahmenelements (12) angeordnet ist, und
eine Gürtellage (16), die zwischen dem Reifenrahmenelement (12) und der Lauffläche angeordnet ist, wobei die Gürtellage (16) einen Mittenbereich (16A) an einer Mitte in der Reifenbreitenrichtung und Schulterbereiche (16B) an beiden Seiten des Mittenbereichs (16A) in der Reifenbreitenrichtung darstellt, wobei eine Breitenabmessung (BCW) des Mittenbereichs (16A) in einer Reifenaxialrichtung in einem Bereich von 85 bis 105 % einer Bodenbreitenabmessung (TW) der Lauffläche liegt, **dadurch gekennzeichnet, dass**:
in einem Fall, in dem Hc eine Steifigkeit des Mittenbereichs (16A) darstellt und Hs eine Steifigkeit der Schulterbereiche (16B) darstellt, Hc > Hs, wobei die Steifigkeit eine Zugsteifigkeit in der Reifenumfangsrichtung je Breiteneinheit darstellt.

2. Reifen (10) nach Anspruch 1, wobei:
die Gürtellage (16) mehrere Kords (36, 40) einschließt,
in dem Mittenbereich (16A) sich der Kord (36) in einer Reifenumfangsrichtung erstreckt und
in den Schulterbereichen (16B) der Kord (40) in Bezug auf die Reifenumfangsrichtung geneigt ist.

3. Reifen (10) nach Anspruch 1, wobei:
die Gürtellage (16) mehrere Kords (36, 40) einschließt, und
in dem Mittenbereich (16A) und den Schulterbereichen (16B) sich die Kords (36, 40) entlang einer Reifenumfangsrichtung erstrecken.

4. Reifen (10) nach Anspruch 2 oder 3, wobei:
der Kord (36) des Mittenbereichs (16A) ein Metallkord ist, und
der Kord (40) der Schulterbereiche (16B) ein Kord aus organischer Faser ist.

5. Reifen (10) nach einem der Ansprüche 2 bis 4, wobei eine Einsetzungsdichte des Kords (36) in dem Mittenbereich (16A) niedriger ist als eine Einsetzungsdichte des Kords (40) in den Schulterbereichen (16B).

6. Reifen (10) nach einem der Ansprüche 2 bis 5, wobei der Kord (40) der Schulterbereiche (16B) einen kleineren Durchmesser aufweist als der Kord (36) des Mittenbereichs (16A).

7. Reifen (10) nach einem der Ansprüche 2 bis 6, wobei der Kord (36) des Mittenbereichs (16A) eine Nichtzugeigenschaft aufweist und der Kord (40) der Schulterbereiche (16B) eine höhere Zugeigenschaft aufweist als der Kord (36) des Mittenbereichs (16A).

## Revendications

1. Bandage pneumatique (10), comprenant :
un élément de cadre du bandage pneumatique (12) composé d'un matériau de résine, l'élément de cadre du bandage pneumatique (12) comportant une partie latérale (26) s'étendant vers l'extérieur à partir d'une partie de talon (24), dans une direction radiale du bandage pneumatique, et une partie de sommet (28) s'étendant vers l'intérieur à partir de la partie latérale (26), dans une direction de la largeur du bandage pneumatique ;
une bande de roulement disposée à l'extérieur de l'élément de cadre du bandage pneumatique (12), dans la direction radiale du bandage pneumatique ; et
une couche de ceinture (16) disposée entre l'élément de cadre du bandage pneumatique (12) et la bande de roulement, la couche de ceinture (16) constituant une zone centrale (16A) au niveau d'un milieu, dans la direction de la largeur du bandage pneumatique, et des zones d'épaulement (16B) au niveau des deux côtés de la zone centrale (16A), dans la direction de la largeur du bandage pneumatique, une dimension de la largeur (BCW) de la zone centrale (16A), dans une direction axiale du bandage pneumatique, étant comprise dans un intervalle représentant 85 à 105% d'une dimension de la largeur au sol (TW) de la bande de roulement, **caractérisé en ce que** :
dans un cas où Hc représente la rigidité de la zone centrale (16A), Hs représentant la rigidité des zones d'épaulement (16B), Hc > Hs, la rigidité représentant la rigidité à la traction, dans la direction circonférentielle du bandage pneumatique, par unité de largeur.

2. Bandage pneumatique (10) selon la revendication 1, dans lequel :
la couche de ceinture (16) inclut plusieurs câblés (36, 40) ;
dans la zone centrale (16A), le câblé (36) s'étend dans une direction circonférentielle du bandage pneumatique ; et
dans les zones d'épaulement (16B), le câblé (40) est incliné par rapport à la direction circonférentielle du bandage pneumatique.

3. Bandage pneumatique (10) selon la revendication 1, dans lequel :
la couche de ceinture (16) inclut plusieurs câblés (36, 40) ; et
dans la zone centrale (16A) et les zones d'épaulement (16B), les câblés (36, 40) s'étendent le long d'une direction circonférentielle du bandage pneumatique.

4. Bandage pneumatique (10) selon les revendications 2 ou 3, dans lequel :
le câblé (36) de la zone centrale (16A) est un câblé métallique ; et
le câblé (40) des zones d'épaulement (16B) est un câblé de fibres organiques.

5. Bandage pneumatique (10) selon l'une quelconque des revendications 2 à 4, dans lequel une densité d'implantation du câblé (36) dans la zone centrale (16A) est inférieure à une densité d'implantation du câblé (40) dans les zones d'épaulement (16B).

6. Bandage pneumatique (10) selon l'une quelconque des revendications 2 à 5, dans lequel le câblé (40) des zones d'épaulement (16B) a un diamètre inférieur à celui du câblé (36) de la zone centrale (16A).

7. Bandage pneumatique (10) selon l'une quelconque des revendications 2 à 6, dans lequel le câblé (36) de la zone centrale (16A) présente une propriété de non traction, le câblé (40) des zones d'épaulement (16B) présentant une propriété de traction supérieure à celle du câblé (36) de la zone centrale (16A).
